# EUROPÄISCHE PATENTSCHRIFT

(11) **EP 2 687 460 B1**
(45) Veröffentlichungstag und Bekanntmachung des Hinweises auf die Patenterteilung: **07.10.2015**
(21) Anmeldenummer: 13188539.4
(22) Anmeldetag: 13.04.2010
(51) Int. Cl.: B65D 85/804, A47J 31/24, B65B 51/22, A47J 31/36

(54) **Einrichtung zum Brühen von Kaffee**
Device for brewing coffee
Dispositif pour faire du café

(30) Priorität: 15.04.2009 EP 09405065
(43) Veröffentlichungstag der Anmeldung: 22.01.2014
(62) Teilanmeldung aus: 10713297.9
(73) Patentinhaber: Qbo Coffee GmbH, 8304 Wallisellen (CH)
(72) Erfinder: Deuber, Louis, 8805 Richterswil (CH)
(74) Vertreter: Frei Patent Attorneys

(56) Entgegenhaltungen:
- WO-A-2008/041262
- FR-A1- 2 908 970

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine Einrichtung zum Brühen von Kaffee.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System kann dabei im Innern der Kapsel ein erheblicher Druck von beispielsweise 5-20 bar herrschen.

Solche Kapseln sind nicht zu verwechseln mit - und gänzlich anderen Anforderungen ausgesetzt als - Portionenverpackungen von Filterkaffee, die durch Abziehen einer Folie, Abnehmen eines Deckels oder dergleichen geöffnet werden und zu keinem Zeitpunkt einem erhöhten Druck ausgesetzt sind. Ebenso wenig sind sie vergleichbar mit den äusseren, aromadichten Verpackungen von "Filterpads". Kapseln der hier beschriebenen Art werden in Brühmodulen von Kaffeemaschinen oft horizontal oder auch vertikal von der heissen Brühflüssigkeit durchquert und sind dabei wie erwähnt einem erheblichen Druck im Innern ausgesetzt. Dabei stellt sich auch das Problem des Abdichtens, darf doch die unter Druck stehende Brühflüssigkeit nicht an der Kapsel vorbei direkt in die Ausleitvorrichtung gelangen.

Als Kapselmaterialien sind insbesondere Aluminium und Kunststoffe, bspw. Polypropylen bekannt geworden. Aluminiumkapseln bringen eine sehr gute Haltbarkeit des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus.

Besonders vorteilhaft in Bezug auf den Materialaufwand sind tiefgezogene Kapseln, die jedoch immer eine markant konische Form aufweisen.

Auf dem Markt sind sowohl Kapseln mit integrierten Filtermitteln erhältlich als auch Kapseln die lediglich eine das Extraktionsgut umschliessende Hülle aufweisen, und für die also der Anstechmechanismus so ausgebildet sein muss, dass nicht in unerwünschter Weise Extraktionsgut zusammen mit dem Extraktionsprodukt aus der Kapsel abgeführt werden kann.

Ein Beispiel für eine Kapsel ohne integrierte Filtermittel wird bspw. in EP 1 886 942 offengelegt.

Erhältliche Kapseln sind im Allgemeinen rotationssymmetrisch und weisen einen umlaufenden Kragen auf, der eine für die Funktionsfähigkeit wesentliche Dreifachfunktion hat:
- der Kragen dient dem Verschliessen der Kapsel beim Abfüllvorgang, indem er in genügendem Abstand zum Kapselinnenraum einen Energierichtungsgeber für eine Ultraschallschweissung oder eine genügend grosse Fläche für ein thermisches Verschweissen aufweist;
- der Kragen dient dem Halten der Kapsel vor dem Brühvorgang;
- der Kragen ist wesentlich für das Abdichten während des Brühvorgangs, stellt er doch sicher, dass keine Brühflüssigkeit an der Kapsel vorbei direkt in die Ausleitvorrichtung gelangt.

Eine zusätzliche Dichtungsfunktion bei Kapseln gemäss dem Stand der Technik kann die konische Form übernehmen, die sehr genau in eine entsprechende Aufnahme der Brühkammer passt.

Viele der erhältlichen Kapseln sind becherförmig ausgeformt, d.h. sie sind um eine Achse rotationssymmetrisch und konisch. Oft hat der Deckel der becherförmigen Kapsel eine andere Materialzusammensetzung als der eigentliche Becher, der die Mantel- und Bodenfläche bildet. Dabei erfolgen die Injektion der Extraktionsflüssigkeit durch den Deckel oder die Bodenfläche und das Ausleiten des Extraktionsprodukts entsprechend durch die Bodenfläche bzw. den Deckel. Diese Kapselform hat sich bewährt, sowohl im Hinblick auf die mechanische Stabilität als auch im Hinblick auf herstellungstechnische Aspekte.

FR 2 908 970 offenbart ein System zum Brühen von Kaffee mit im Wesentlichen kugelförmigen Getränkekapseln. Das System wird nebst den Getränkekapseln durch eine Kaffeemaschine mit einem Brühmodul gebildet, welches einer erstes Brühmodulteil und ein relativ zu diesem bewegbares zweites Brühmodulteil aufweist.

WO 2008/041262 zeigt eine würfelförmige Portionenkapsel mit einer mit einer Einlass- und Auslassöffnung, die je durch einen wasserlöslichen Deckel bedeckt sind, sowie eine Maschine zum Zubereiten eines Brühgetränks aus einer solchen Kapsel.

Eine besondere Problematik ist mit der Verwirbelung des Extraktionsguts während des Brühprozesses verbunden. Während des Extraktionsprozesses fliesst Flüssigkeit mit grosser Geschwindigkeit durch die Kapsel. Bei einer beschränkten Verdichtung des Extraktionsgutes wird dieses während des Brühprozesses stark verwirbelt. Aus diesem Grund ist bereits vorgeschlagen worden (EP 1 886 942), das Extraktionsgut während des Kapselfüllprozesses stark zu komprimieren. Dieses Verfahren ist jedoch recht aufwändig, und beim Transport der Kapsel kann die durch die Kompression erreichte tablettenartige Konsistenz des Extraktionsguts verloren gehen.

Eine weitere, oft diskutierte Problematik im Zusammenhang mit Portionskapseln für Brühgetränke ist die aufwändige Verpackung, welche die Energiebilanz verschlechtert.

Es ist eine Aufgabe der Erfindung, eine Einrichtung zum Brühen von Kaffee mit einer Kapsel sowie einer Kaffeemaschine zur Verfügung zu stellen, welche Nachteile des Standes der Technik überwindet.

Diese Aufgabe wird gelöst durch die Erfindung, wie sie in den Patentansprüchen definiert ist.

Die Portionenkapsel ist vom eingangs erwähnten Typus, bei welchem das Extraktionsgut bspw. luftdicht abgeschlossen ist und die ein Anstechen der Kapsel an zwei einander gegenüberliegenden Seiten für die Extraktion vorsieht. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System muss dabei die Kapsel einem erheblichen Druck in ihrem Innern von beispielsweise 5-20 bar, insbesondere mehr als 10 bar standhalten können. Das schliesst die Verwendung der Kapsel in Brühprozessen mit einem niedrigeren Druck von bspw. nur 1-2 bar - insbesondere für Filterkaffee nach amerikanischer Art - jedoch nicht aus.

Die Kapsel hat die Form eines Würfels oder Quaders und ist frei von abstehenden Kragen oder dergleichen.

Unter quader- bzw. würfelförmig versteht man hier eine Form, die von der geometrisch exakten Quader- bzw. Würfelform nicht so weit abweichen, dass sie funktionell sehr verschieden wären; bspw. ist die Form eines Pyramidenstumpfs mit rechteckiger bzw. quadratischer Grundfläche, wobei die an die Grundfläche angrenzenden Seitenflächen gegenüber der Senkrechten zur Grundfläche um nur einen kleinen Neigungswinkel α von bspw. höchstens 3° oder 2°, vorzugsweise höchstens ca. 1° geneigt sind, mit eingeschlossen. Die Quader- bzw. Würfelform schliesst wie erwähnt einen umlaufenden, vom Kapselkörper auf der Ebene einer Endfläche abstehenden Kragen aus, der zum Halten der Kapsel in Führungsschlitzen vorgesehen ist. Die Quader- bzw. würfelförmige Kapsel kann trotzdem herstellungstechnisch bedingte umlaufende Ränder (bspw. eine Schweissbraue) aufweisen kann, die bspw. maximal 1.5 mm oder 1 mm, 0.8 mm, 0.6 mm, besonders bevorzugt 0.5 mm oder weniger seitlich hervorstehen, die durch ihre beschränkten Abmessungen die Funktion der Würfel- oder Quaderform nicht wesentlich beeinträchtigen und die ausserdem bspw. von einer Endflächen-Ebene abgesetzt sind.

Diese Form hat erstens den grossen Vorteil, dass das Extraktionsgut von verschiedenen Seiten her komprimierbar ist, was bei den becherförmigen Kapseln nicht der Fall ist. Insbesondere kann das Extraktionsgut auch im bereits in der Kapsel verpackten Zustand noch komprimiert werden - durch Drücken zweier einander gegenüberliegender Seitenwände gegeneinander. Bei becherförmigen Kapseln ist das nicht ohne Weiteres zerstörungsfrei möglich. Bevorzugt ist die Kapsel so ausgebildet, dass eine Deformierung von zwei gegenüberliegenden Seitenwänden (bzw. von zentralen Punkten an diesen Seitenwänden) entgegen einer elastischen Kraft volumenverringernd möglich ist. Dies bezieht sich auf den Raumtemperatur-Zustand bezogen und schliesst eine bleibende Verformung einer Kunststoff-Kapselwandung im heissen Zustand nicht aus.

Zweitens ergibt sich der Vorteil der markant verbesserten Packbarkeit. Die gefüllten und versiegelten Kapseln können so aneinandergereiht und aufeinander gestapelt werden, dass sich ein im Wesentlichen von Zwischenräumen freier Stapel ergibt, der auch - bspw. als Würfel - ansehnlich präsentiert werden kann und trotzdem mit einer minimalen äusseren Verpackung auskommt.

Bevorzugt ist die Kapsel von jeder Seite - bzw. jedem Paar von einander gegenüberliegenden Seiten her anstechbar. Das bedeutet hier, dass die Kapselwandung an der betreffenden Würfelseite nicht nur durch eine entsprechende metallische Spitze perforierbar ist, sondern auch dass die an einem Paar von gegenüberliegenden Kapselseiten her angestochene Kapsel beim Einleiten der Flüssigkeit dem Brühdruck standhält und die Brühflüssigkeit nur auf der Extraktionsseite und nur am Ort der Perforationen abfliesst.

Die Kapsel wird durch die alle Seiten, Kanten und Ecken umfassende Wandung hermetisch und Sauerstoffdicht abgeschlossen. Es ist also keine separate, die Kapsel ganz oder teilweise bedeckende Folie und kein sauerstoffdichter Beutel oder dergleichen für die Kapsel notwendig. Im Vergleich zu bekannten Systemen ist die Abfallmenge deutlich geringer.

Bevorzugt besteht die Kapsel auf allen Seiten aus im Wesentlichen derselben Materialzusammensetzung. Insbesondere kann die Kapsel auch auf allen Seiten im Wesentlichen dieselbe Dicke aufweisen. Mit anderen Worten ist keine spezielle, anders als der Grundkörper ausgestaltete Deckelfolie notwendig. "Im Wesentlichen dieselbe Dicke" kann bspw. bedeuten, dass sich die Dicken der verschiedenen Seiten um höchstens 30% unterscheiden.

Besonders vorteilhaft ist die Würfelform. Bei Ausgestaltung mit auf allen Seiten derselben Materialzusammensetzung und Dicke spielt es keine Rolle, wie die würfelförmige Kapsel in ein Brühmodul des Extraktionsgeräts (Kaffeemaschine oder dergleichen) eingelegt wird. Das verringert das Risiko von Fehlmanipulationen durch den Benutzer.

Die Kapsel besteht vorzugsweise aus Kunststoff. Ein speziell bevorzugtes Material für die Kapsel ist Polypropylen (PP). Auch andere Materialien sind denkbar, insbesondere andere lebensmittelverträgliche Kunststoffe. Die Wandstärke beträgt bei der Ausgestaltung als Kunststoffkapsel vorzugsweise zwischen 0.1 mm und 0.5 mm, bspw. zwischen 0.2 mm und 0.4 mm, insbesondere zwischen 0.25 mm und 0.35 mm.

Die Kapsel ist bei der Ausgestaltung als Kunststoffkapsel vorzugsweise durch Verformen (bspw. Tiefziehen) einer Kunststofffolie hergestellt. Das macht eine im Vergleich zu anderen Verfahren - bspw. dem Spritzgiessen - massiv reduzierte benötigte Materialmenge möglich. Die Kunststofffolie kann wie an sich bekannt eine Sauerstoffsperrschicht enthalten. Bisherige tiefgezogene Kunststoffkapseln waren immer konisch, weil konische Formen dem Tiefziehverfahren entgegenkommen. Die Erfindung (bzw. Ausführungsformen davon) beschreitet diesbezüglich einen gänzlich neuen Weg, indem eine vom Konischen abweichende Form gewählt wird, die sich wie vorstehend erwähnt als sehr vorteilhaft erweist. Zu diesem Zweck wird ein eigens für solche Anwendungen entwickeltes Tiefziehwerkzeug mit speziellen Eigenschaften verwendet.

Die Kapsel wird zusammen mit einer Kaffeemaschine mit einem Brühmodul zur Verfügung gestellt, welches Folgendes aufweist:
- ein erstes Brühmodulteil, und
- ein relativ zu diesem bewegbares zweites Brühmodulteil, wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die in Kapsel und eine in der Form auf die Form der Kapsel abgestimmte Brühkammer bilden, welche die Kapsel beim Brühvorgang mindestens teilweise umgibt, wobei die Ausleitvorrichtung und der Injektor je mindestens eine Perforationsspitze aufweisen, welche die Kapsel beim Verschliessen der Brühkammer perforiert, wobei
- die Brühkammer auf die vorstehend beschriebene Form der Kapsel abgestimmt ist und so abdichtend wirkt, dass durch den Injektor in die Kapsel eingeleitete Brühflüssigkeit nur durch die Kapsel auf die Seite der Ausleitvorrichtung gelangen kann.

Mit anderen Worten wird der Weg weg vom umlaufenden Kragen, der die Dichtungsfunktion übernimmt, hin zu einer Brühkammer beschritten, welche im Wesentlichen würfelförmige Kapseln aufnimmt und trotzdem Mittel aufweist, die Brühflüssigkeit unter Druck durch die Kapsel zu bringen.

Gemäss einer weiteren bevorzugten Ausführungsform ist das Brühmodul frei von Haltefurchen oder dergleichen zum Halten eines - erfindungsgemäss nicht vorhandenen - Kragens, sondern die Kapsel wird direkt in die Brühkammer eingeworfen. Das bedeutet bspw., dass das erste Brühmodulteil eine Kapselaufnahme mit einer Auflage und einer seitlichen Führung bildet, wobei die Auflage so positioniert ist, dass die über die Einwurfposition eingeworfene Kapsel durch die seitliche Führung geführt auf der Auflage zu liegen kommt, dass das zweite Brühmodulteil zum Verschliessen der Brühkammer relativ zum ersten Brühmodulteil bewegbar ist, und dass die Auflage und die seitliche Führung ein Teil der Wandung der Brühkammer bilden.

Ebenfalls bevorzugt weist das Brühmodul ein Kompressionsmittel auf, von welchem bspw. von zwei lateralen Seiten her die Kapsel zusammengepresst wird, was eine verbesserte Extraktion zur Folge hat. Das Kompressionsmittel kann bspw. zwei entgegen einer Federkraft in den Kapselraum hinein verschiebbare Bolzen aufweisen, welche beim Schliessen der Brühkammer durch eine Führungskurve verschoben werden.

Ein bevorzugtes Verfahren für die Herstellung der Kapsel geht wie folgt: Zunächst wird aus einem geeigneten Kunststoff ein fünfseitiger, einseitig offener Würfel-Grundkörper (oder entsprechend anderer Polyeder-Grundkörper) gefertigt. Dies kann in einer Verpackungsherstellungsfabrik und mit dem Tiefziehverfahren geschehen. Dann wird in einer Abfüllanlage der offene Grundkörper mit dem Extraktionsgut gefüllt. Anschliessend wird die fehlende Seite als Deckel am offenen Grundkörper befestigt, wobei der Deckel vorzugsweise dieselbe Materialzusammensetzung und Dicke aufweist wie der Grundkörper.

Die Befestigung erfolgt gemäss einer ersten Möglichkeit entlang des umlaufenden Randes des Grundkörpers, bspw. mit Ultraschallschweissen, Thermoschweissen oder durch Verkleben. Zu diesem Zweck kann der Grundkörper zunächst einen entlang der offenen Seite umlaufenden, gegen innen oder aussen abstehenden Kragen aufweisen, mit dem der Deckel verschweisst oder verklebt wird. Im Falle einer Befestigung mittels Ultraschallschweissens kann der Kragen ausserdem mit einem Energierichtungsgeber versehen sein. Dabei kann im Unterschied zu bekannten Lösungen der Energierichtungsgeber nicht möglichst weit aussen, sondern in der Nähe der Innenseite angeordnet sein. Beispielsweise kann die Distanz *d* zwischen der einer Kante des Energierichtungsgebers und der von der inneren Wand der Kapsel definierten Ebene nicht mehr als 0.7 mm, bevorzugt nicht mehr als 0.6 mm, 0.5 mm oder 0.4 mm betragen und beispielsweise im Bereich zwischen 0.2 mm und 0.4 mm sein. Wenn - was bevorzugt ist -der Kragen gegen aussen absteht, kann der Deckel etwas grösser sein als die offene Seite des Grundkörpers und bspw. etwa bis zum äusseren Rand des Kragens ragen. Nach der Verschweissung kann der umlaufende Rand optional mindestens teilweise abgetrennt werden, beispielsweise durch Stanzen, damit sich höchstens geringe Abweichungen von der Form des Würfels (der entsprechenden anderen Polyeders) ergeben.

Gemäss einer zweiten Möglichkeit weist ebenfalls der Grundkörper zunächst einen umlaufenden, gegen aussen abstehenden Kragen auf. Der Deckel kann flach oder - bevorzugt - nach aussen gewölbt sein. Dann wird das Ultraschall-Trennschweissverfahren angewandt, bei welchem zwischen einer Sonotrode und einem Schneidamboss Ultraschallenergie absorbiert wird, welche einerseits eine vergleichsweise tief gehende Verschweissung bewirkt, die auch eine grosse Druckbeständigkeit aufweist, und welche andererseits den vorstehenden Kragen gleich beim Schweissvorgang abtrennt.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Figur 1 eine Ansicht einer Kapsel,
- Figur 2 eine Ansicht einer Variante der Kapsel von Fig. 1,
- Figur 3 eine Ansicht einer weiteren Variante der Kapsel von Fig. 1,
- Figur 4 schematisch eine annähernd würfelförmige, leicht pyramidenstumpfförmige Kapsel,
- Figur 5 ein Anstechen über eine Kapselseite,
- Figur 6 ein Anstechen über eine Kapselkante oder -ecke,
- Figur 7 einen Grundkörper mit Hilfskragen zur Herstellung einer erfindungsgemässen Kapsel,
- Figur 8 eine Detail des Grundkörpers und eines Deckels während des Verfahrens zur Herstellung der Kapsel,
- Figuren 9 und 10 einen Grundkörper und einen Deckel für ein alternatives Verfahren zur Herstellung einer erfindungsgemässen Kapsel,
- Figur 11 eine Ansicht einer nach dem Verfahren gemäss Figuren 9 und 10 hergestellten Kapsel, und
- Figuren 12- und 13Darstellungen eines Brühmoduls zum Zusammenwirken mit erfindungsgemässen Kapseln.

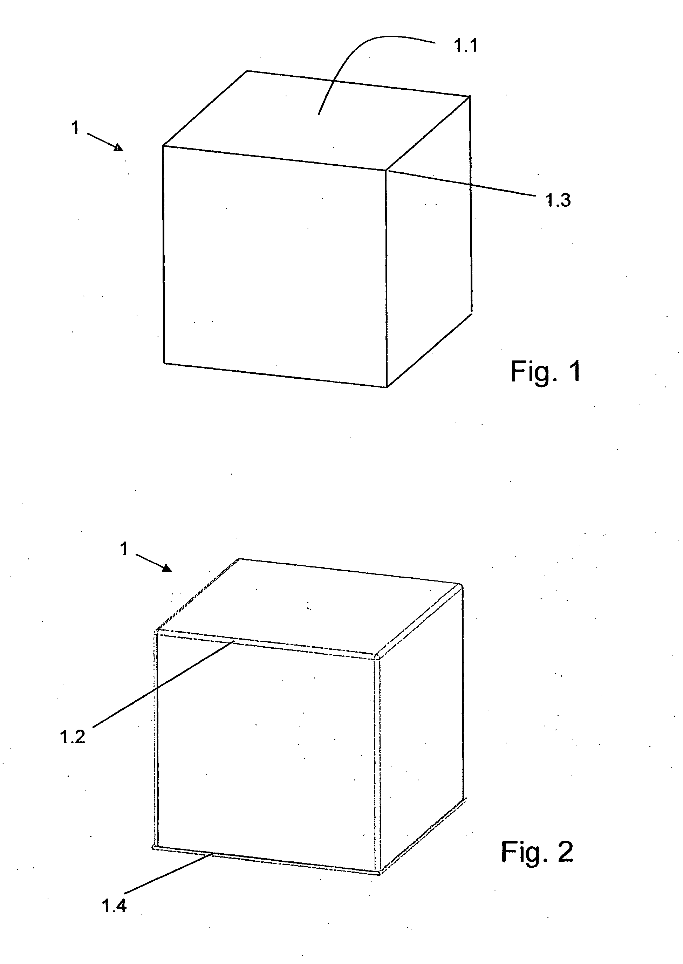

Die Kapsel 1 gemäss **Figur 1** ist würfelförmig und besteht aus Polypropylen mit einer Wandstärke von 0.1 mm und 0.5 mm, vorzugsweise zwischen 0.2 mm und 0.4 mm, bspw. zwischen 0.25 mm und 0.35 mm.

Die äussere Länge der Würfelkanten 1.2 beträgt für Einzelportionen für Kaffee für kontinentaleuropäische Trinkgewohnheiten bevorzugt zwischen 24 und 30 mm, beispielsweise zwischen 26 und 27 mm. Bei einer äusseren Kantenlänge von 27.5 mm ergibt sich ein Füllgewicht von maximal ca. 8.5 g Kaffee. Die Kapselgrösse von Einzelportions-Kapseln kann jedoch auch andere Bemessungen haben, beispielsweise für amerikanische Kaffeetrinkgewohnheiten. Dort können die Kapseln eine äussere Kantenlänge von bspw. bis zu 34 mm, insbesondere beispielsweise ca. 32 mm habe, für eine Füllmenge von ca. 14-15 g. Für solche Trinkgewohnheiten kann auch der Druck des eingeleiteten Wassers entsprechend anders gewählt sein und beispielsweise nur ca. 1-2 bar anstatt der sonst bevorzugten 10-18 bar betragen. Insgesamt ist ein bevorzugter Bereich der Kantenlängen zwischen 24 mm und 34 mm.

Die Kapsel kann für das Einleiten der Extraktionsflüssigkeit und das Ausleiten des Extraktionsprodukts von allen sechs Seiten 1.1, allen zwölf Kanten 1.2 und allen acht Ecken 1.3 her angestochen werden, wobei das Ein- und das Ausleiten bevorzugt an einander gegenüberliegenden Seiten/Kanten/Ecken erfolgt.

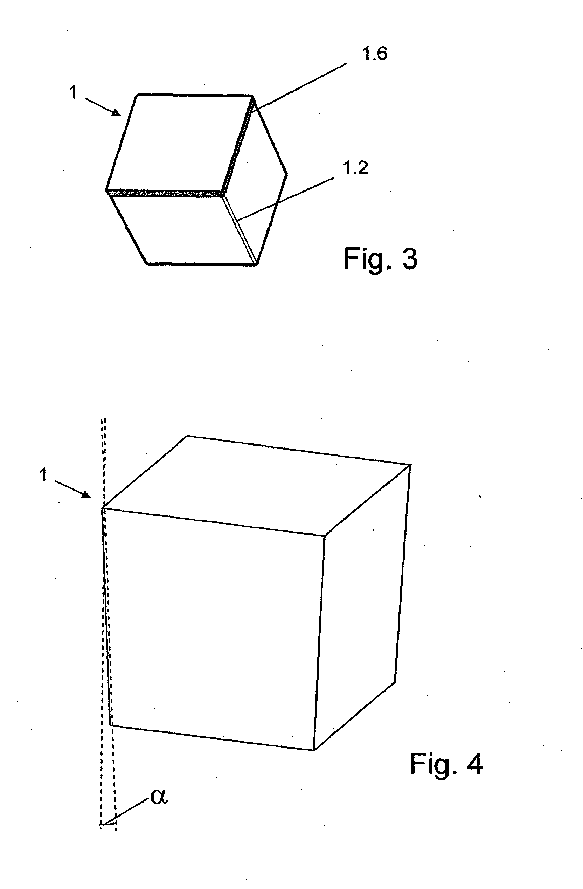

In der Darstellung gemäss **Figur 2** sieht man, dass eine würfelförmige Kapsel Kanten aufweisen kann, die als abgerundete Kanten 1.2 ausgebildet sind. Ausserdem ist ein in Fig. 2 unterseitig liegender, umlaufender, leicht seitlich herausragender Kragen 1.4 vorhanden, der herstellungsbedingt ist, was nachfolgend noch eingehender erläutert wird. Wie **Figur 3** zeigt, kann auch eine umlaufende Verstärkung 1.6 vorhanden sein, die ebenfalls herstellungstechnisch bedingt ist

Die Kapsel 1 gemäss **Figur 4** ist ebenfalls näherungsweise würfelförmig. Die in der Figur oben liegende Seite 1.1 ist jedoch etwas grösser als die Unterseite, so dass de Kapsel streng mathematisch gesehen eine Pyramidenstumpfform hat. Der Neigungswinkel α der in der Figur seitlichen Flächen gegenüber der Senkrechten zur Grundfläche - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten, und weicht bspw. um höchstens 5% davon ab.

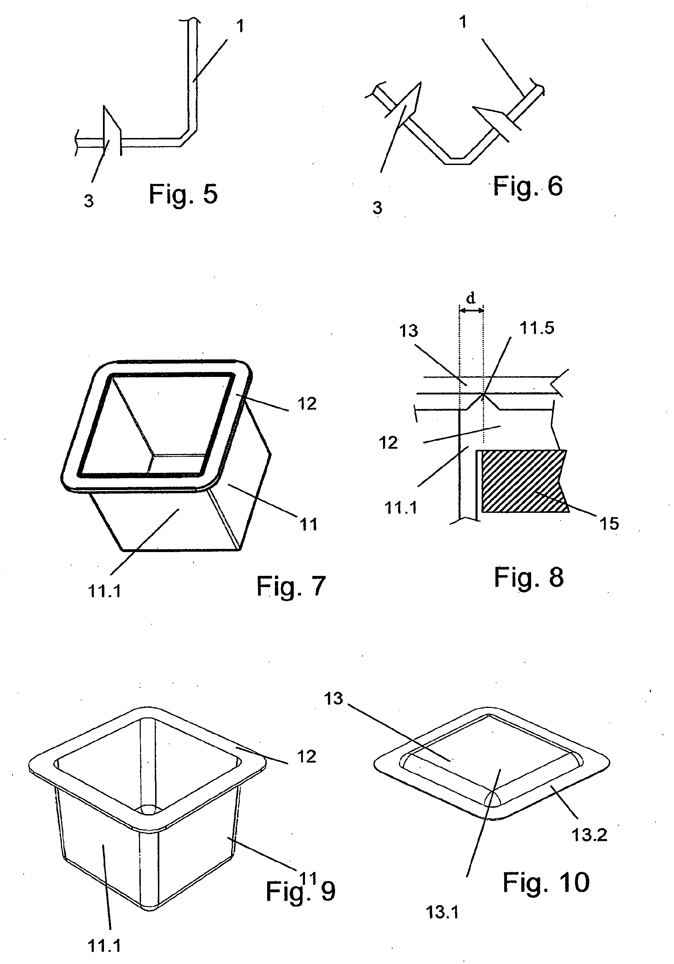

**Figur 5** zeigt sehr schematisch das Anstechen einer Seitenwand der Kapsel mit einem Perforationselement 3. Perforationselemente zum Anstechen der Kapsel zum Zweck des Ein- oder Ausleitens von Flüssigkeit sind bekannt und werden auch weiterhin entwickelt. Grundsätzlich ist die erfindungsgemässe Kapsel für jegliche Perforationsmechanismen geeignet, die zum Anstechen des gewählten Kapselmaterials mit der gewählten Wandstärke entwickelt worden sind, das heisst aufgrund der speziellen Form der erfindungsgemässen Kapsel ergeben sich keine anderen Anforderungen an den Anstechmechanismus als bei anderen Formen. Es sind jedoch Anordnungen bevorzugt, bei denen injektorseitig und insbesondere extraktionsseitig mehrere verteilte Perforationselemente vorhanden sind, und nicht nur ein mittig angebrachtes Perforationselement.

**Figur 6** zeigt eine entsprechende Anordnung zum Anstechen einer Kapsel 1 von einer Kante her. Die Anordnung weist zwei einander zugeordnete Perforationselemente in unmittelbarer Nähe zur Kante auf, die die an die Kante angrenzenden Seiten perforieren, damit eine Flüssigkeit ein- oder ausgeleitet werden kann. Weitere Paare von Perforationselementen können entlang der Länge der Kante angeordnet sein, oder den beiden an die Kante angrenzenden Seiten kann eine unterschiedliche Zahl von Perforationselementen zugeordnet sein. Auch ein Anstechen der Kapsel von der Ecke her ist denkbar, wobei dann vorzugsweise mindestens drei Perforationselemente vorhanden sind, für jede an die Ecke stossende Seite der Kapsel eines.

Die entsprechende Anordnung von Perforationselementen zum Aus- bzw. Einleiten ist vorzugsweise an der gegenüberliegenden Seite/Kante/Ecke vorhanden, wobei im Prinzip auch asymmetrische Anordnungen (Einleiten über eine Kante, Ausleiten über eine Seitenfläche oder dergleichen) denkbar wären.

Anhand von **Figuren 7 und 8** wird nachstehend noch ein Verfahren zur Herstellung einer Kapsel der vorstehend beschriebenen Art erörtert, wobei das Verfahren der erwähnten ersten Möglichkeit entspricht. **Figur 7** zeigt einen einseitig offenen würfelförmigen Körper 11 wie er beispielsweise durch Tiefziehen herstellbar ist. Die an die in der Figur oben liegende Öffnung angrenzenden Seitenwände 11.1 sind ganz leicht - um 1° - zur Senkrechten auf die der Öffnung gegenüberliegende Seitenwand (,Boden') geneigt, und zwar so, dass die Öffnung etwas grösser ist als die auf der Innenseite gemessene Fläche des Bodens. Durch dieses optionale Merkmal ist der würfelförmige Körper im nicht gefüllten Zustand Platz sparend stapelbar. Gemäss der Erfindung besteht auch die Möglichkeit, diese leichte Neigung wegzulassen, um eine ganz exakt würfelförmige Kapsel zu erhalten; in diesem Fall sind die nicht gefüllten, geöffneten würfelförmigen Körper nicht mehr gut stapelbar und werden bspw. mit Vorteil als Schüttgut transportiert.

Im Bereich der Öffnung ist aussenseitig am geöffneten würfelförmigen Körper ein umlaufender Kragen 12 angebracht, der seitlich recht markant vorstehen kann. Wie man der Detaildarstellung gemäss **Figur 8** entnimmt, besitzt dieser Kragen 12 einen nach oben (also in Richtung der Öffnungsseite) hin gerichteten Kamm 11.5 mit einer oberseitigen Kante (entsprechend einer Spitze in der Querschnittdarstellung).

Der Kragen 12 mit dem Kamm 11.5 dient als Hilfsmittel bei der Befestigung des Deckel 13 mittels Ultraschallschweissen. Dazu wird der Deckel 13 wie in Fig. 8 illustriert angelegt. Anschliessend wird von oben (bezogen auf die in Fig. 8 gezeichnete Orientierung) eine Sonotrode eines Ultraschallschweissgeräts gegen den Deckel gepresst und Ultraschallschwingungen werden in diesen eingekoppelt. Der Kragen 12 dient dabei erstens dem Anlegen einer Gegenkraft: Der mit dem Extraktionsgut gefüllte Körper 11 mit wird vor dem Beaufschlagen mit Ultraschallschwingungen auf einer Auflage 15 platziert, so, dass er in eine entsprechend dem Querschnitt des Körpers ausgeformte quadratische Öffnung hineinragt und mit dem Kragen 12 am Rand dieser Öffnung aufliegt. Dadurch ist der Körper beim Ultraschallschweissen fixiert, und die notwendige Gegenkraft kann unabhängig von der Stabilität des Körpers 11 angelegt werden. Der Kamm 11.5 dient als Energierichtungsgeber beim Ultraschallschweissvorgang. Im Bereich des Kamms wird primär Ultraschallenergie in Wärme umgewandelt, so dass das Deckel- 13 und Körpermaterial 11 in deren Umgebung zu schmelzen beginnen und so miteinander verschweisst werden. Anstelle eines Kamms 11.5 oder zusätzlich dazu kann der Kragen auch andere als Energierichtungsgeber wirkende Strukturen aufweisen, bspw. eine Mehrzahl von Spitzen etc.

Anschliessend an den Ultraschallschweissvorgang kann der Kragen durch Stanzen entfernt werden. Dadurch entsteht der Würfel wie in Fig. 3 dargestellt, allenfalls mit einem nur ganz wenig (bspw. um nicht mehr als 0.1 mm) hervorstehenden übrigbleibendem Kragen 1.4 wie in Fig. 2 dargestellt.

Zu diesem Zweck ist günstig, wenn - wie in der Figur 8 dargestellt - der Energierichtungsgeber (hier: Kamm 11.5) nicht wie vom Stand der Technik her bekannt möglichst weit aussen am Kragen, sondern innenseitig, in der Nähe der inneren Wand des Körpers 11 liegt, denn beim Abstanzvorgang sollte vorzugsweise das Abstanzwerkzeug ausserhalb des Ortes ansetzen, an dem vor dem Verschweissen der Energierichtungsgeber war. Beispielsweise beträgt der Abstand *d* zwischen der durch den Kamm 11.5 gebildeten Kante und der inneren Wand nicht mehr als 0.7 mm, besonders bevorzugt noch weniger, bspw. maximal 0.6 mm, 0.5 mm oder 0.4 mm und beispielsweise zwischen 0.25 mm und 0.4 mm.

In **Figuren 9 und 10** sind Varianten des Kapselkörpers 11 (mit etwas übertrieben dargestellter leichter Konizität) und des Deckels dargestellt, wie sie für ein Herstellungsverfahren nach der zweiten Möglichkeit (mit dem Ultraschall-Trennschweissverfahren) verwendbar sind. Ein Kragen 12 des Kapselkörpers und ein Kragen 13.2 des Deckels werden in einem Amboss aufeinander gelegt und dann mit dem Ultraschall-Trennschweissverfahren abgetrennt, wobei die würfelförmige Kapsel mit einer ganz leicht hervorstehenden Schweissbraue resultiert. Im Unterschied zur vorstehend beschriebenen Ausführungsform weist der Kapselkörper eine im Vergleich zur Breite der Seitenwände leicht geringere Höhe auf, und der Deckel ist nach aussen gewölbt (in der Figur sehr gut sichtbar ist die Wölbung der Deckelinnenpartie 13.1) zur Ergänzung der fehlenden Würfelhöhe. Dadurch ist die Schweissbraue leicht von der oberen Endfläche abgesetzt, d.h. nach unten versetzt.

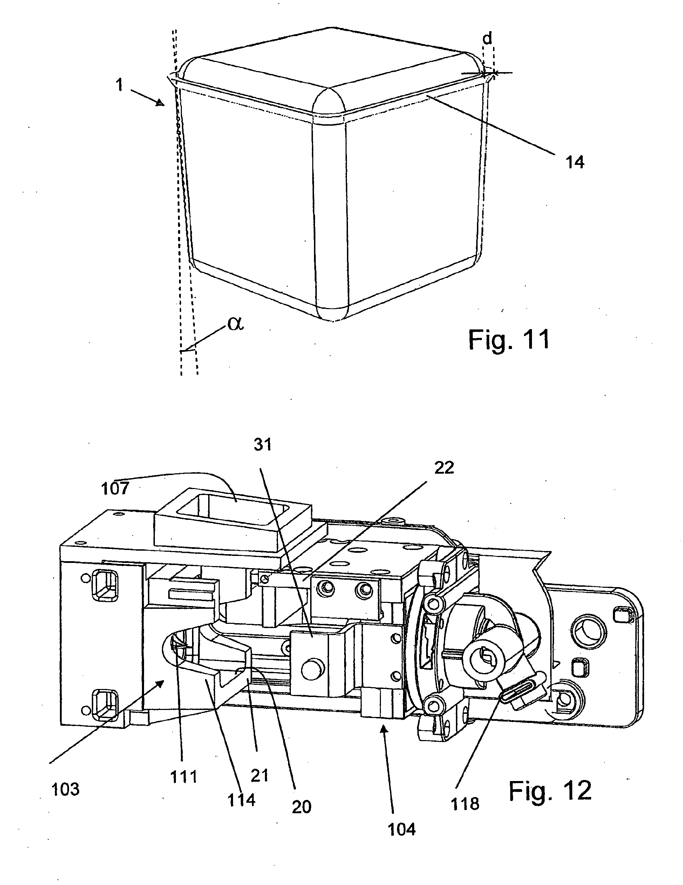

**Figur 11** zeigt ein Beispiel einer mit dem vorstehend erwähnten Ultraschall-Trennschweissverfahren hergestellten Kapsel 1. Deutlich sichtbar sind der ganz leicht von 0° verschiedene Winkel α von ca. 1° (s. auch Fig. 4) und die umlaufende Schweissbraue 14, die allseits um maximal ca. d=0.35 mm seitlich vorsteht, bei einer Würfelgrösse von 27.5x27.5x27.5 mm, also maximal um ca. 3%. Die Schweissbraue ist wie bereits erwähnt leicht gegenüber der oberseitigen Endfläche nach unten versetzt.

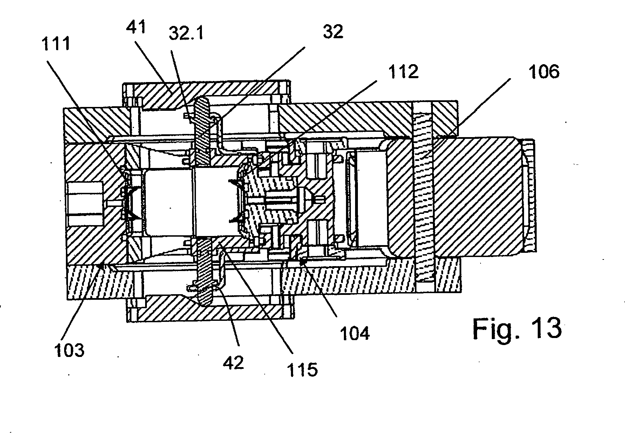

**Figuren 12** **und** **13** zeigen das Brühmodul mit der Kapsel 1. Das Brühmodul weist in an sich bekannter Art zwischen einem Gerüst mit zwei vertikalen Führungswänden geführt eine Ausleitvorrichtung 103 und einen Injektor 104 auf, die durch einen um einen Drehzapfen 106 schwenkbaren Bedienhebel relativ zueinander verschiebbar sind. In der gezeichneten Ausführungsform ist der Injektor durch eine Schwenkbewegung des Bedienhebels in Richtung der Ausleitvorrichtung 103 verschiebbar, während letztere relativ zum Gerüst unbeweglich ist.

In Figur 12 gut sichtbar ist die Einwurföffnung 107 zum Einwerfen der kubischen Portionenkapsel. Die Einwurföffnung ist im Gerüst ausgebildet, befindet sich im Bereich der Ausleitvorrichtung 103 und bleibt wie diese bei einer Bewegung des Bedienhebels stationär. Die Einwurföffnung kann sich gegen unten verengend leicht konisch sein um so beim Einwerfen eine zentrierende Wirkung auf die Kapsel zu haben, ohne dass die Gefahr eines Verkantens der Kapsel zu gross wäre.

Im Betriebszustand dient das Brühmodul als horizontales Brühmodul einer Kaffeemaschine, welche nebst dem Brühmodul einen Wassertank, eine Wasserheizungsvorrichtung (bspw. Durchlauferhitzer) und eine Pumpe zum Zuführen von Brühwasser zum Injektor 104 aufweist. Die entsprechenden Zuführkanäle 118 des Injektors können wie an sich bekannt ausgebildet sein; sie sind nicht Gegenstand der Erfindung und werden hier nicht eingehender beschrieben. Der Injektor weist ausserdem mindestens eine Anstechspitze 112 mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 103 ist mit mindestens einer Anstechspitze 111 und einer zugeordneten Ausleitöffnung versehen. Weiter ist je nach Konfiguration auch eine Auslaufleitung vorhanden, mit welcher aus dem Austritt der Ausleitvorrichtung austretender Kaffee (oder dgl.) so geführt wird, dass er in eine am vorgesehenen Ort abgestellte Tasse rinnt.

Wie besonders gut in Figur 12 sichtbar ist, bildet die Ausleitvorrichtung 103 eine Kapselaufnahme mit einer die Auflagefläche 20 definierende Auflage 21 für die durch die Einwurföffnung eingeworfene Kapsel.

Die bei offener Brühkammer durch die Einwurföffnung eingeworfene annähernd würfelförmige Kapsel wird durch die ersten Seitenwände geführt auf der Auflage 21 aufliegen.

Der Injektor weist ausserdem beiderseits je einen über ein Führungsblech 31 angebrachten Anpressbolzen 32 auf, der entgegen einer durch die Federkraft einer in der Figur nicht dargestellten, zwischen einem Kragen 32.1 des Anpressbolzens und der Seitenwand 115 angeordneten Feder gegen innen verschiebbar ist, so, dass er in einer Ruhelage die Seitenwände 115 gegen innen nicht überragt und in einer ausgelenkten Lage über die Seitenwände hinaus nach Innen und in den Brühraum hinein ragt. Der Kragen 32.1 bildet gleichzeitig auch zusammen mit dem Führungsblech 31 einen Anschlag für die radiale Bewegung des Anpressbolzens 32 nach aussen.

Die Funktionsweise der Anpressbolzen 32 ist in **Figur 13** verdeutlicht. Im Seitenteil des Brühmoduls ist beidseitig je eine Kurvenbahn 42 integriert. Eine solche kann entweder in der entsprechenden Seitenwand selbst oder wie dargestellt in einem an der Seitenwand befestigten Kurvenbahnelement 41 ausgebildet sein. Der Anpressbolzen 32 wird von der Federkraft gegen aussen gegen die Kurvenbahn 42 gedrückt. Beim Verschieben des Injektors 104 von der offenen in die geschlossene Stellung wird er aufgrund des Verlaufs der Kurvenbahn entgegen der Federkraft nach innen ausgelenkt. Dadurch wird die eingeführte Kapsel beidseitig zusammengepresst; die Auslenkung der Anpressbolzen gegen innen kann bspw. zwischen 2 und 8 mm betragen, bevorzugt zwischen 3.5 und 7 mm. Dadurch wird das Kaffeepulver im Innern der Kapsel verdichtet, insbesondere in einem zentralen Bereich. Als Folge davon wird auch verhindert, dass mittig durchfliessende Brühflüssigkeit einen geringeren Widerstand erfährt als entlang der Kapselperipherie fliessende Brühflüssigkeit.

Beim Übergang in den geschlossenen Zustand der Brühkammer wird ausserdem die Kapsel leicht zur Seite der Ausleitvorrichtung hin verschoben und dabei beidseitig - durch die Anstechspitzen 111 der Ausleitvorrichtung und die Anstechspitzen 112 des Injektors - angestochen.

Die Anpressbolzen 32 haben nebst dem Komprimieren des Extraktionsguts noch eine weitere Funktion. Sie bewirken, dass nach dem Brühvorgang beim Öffnen der Brühkammer die Kapsel aus der Kapselaufnahme so in Richtung der Injektorseite verschoben wird, dass sie nach unten und in einen (nicht gezeichneten) Kapselbehälter fallen kann. Dies geschieht automatisch, indem beim Verschieben des Injektors zunächst die Anpressbolzen 32 noch ins Brühkammerinnere eingreifen und die Kapsel fixieren; diese Fixierung löst sich erst ungefähr in der in Figur 12 gezeichneten Position, in welcher der Kapselschwerpunkt schon jenseits der Auflagefläche liegt. Diesem Effekt kommt je nach Kapselfüllgrad zusätzlich entgegen, dass das Extraktionsgut nach dem Brühvorgang oft aufgequollen ist und daher dazu neigen wird, die Kapselwände leicht gegen aussen auszubauchen.

Ebenfalls in Figur 13 sichtbar ist, dass die Anstechspitzen 112 auf der Injektorseite einen anderen Abstand voneinander haben als die Anstechspitzen 111 auf der Ausleitvorrichtungsseite. Im dargestellten Beispiel sind die Anstechspitzen auf der Injektorseite markant weiter aussen angeordnet (hier in einem gegenseitigen Abstand von 19 mm) als die Anstechspitzen auf der Ausleitvorrichtungsseite (hier in einem gegenseitigen Abstand von 14 mm). Generell ist bevorzugt, dass die Abstände der Spitzen sich signifikant unterscheiden, bspw. um mindestens 15%.

Die Brühkammer ist so ausgebildet, dass während des Brühvorgangs kein Brühwasser an der Kapsel vorbei in die Ausleitvorrichtung gelangt, und auch dass kein Extraktionsprodukt anderswohin als in die Ausleitvorrichtung fliesst.

## Patentansprüche

1. Einrichtung zum Brühen von Kaffee, aufweisend mindestens eine Kapsel sowie eine Kaffeemaschine mit einem Brühmodul,
wobei die Kapsel eine Kapselwandung aufweist, die einen geschlossenen, mit Kaffeepulver gefüllten Innenraum umgibt,
und wobei die Kapselwandung ferner durch das Verschliessen einer die Kapsel beim Brühvorgang mindestens teilweise umgebenden Brühkammer der Kaffeemaschine zum Einleiten einer Extraktionsflüssigkeit unter Druck und zum Ausleiten von nach einem Brühvorgang im Innenraum der Kapsel entstandenem Kaffee durch Perforationselemente (3) einer Injektor- bzw. Ausleitvorrichtung perforierbar ist,
wobei die Kapsel dazu ausgebildet ist, während des Brühvorgangs unter Überdruck zu stehen, wobei die Kapsel bis auf einen möglichen umlaufenden, maximal 1.5 mm seitlich hervorstehenden Rand die Form eines Würfels oder Quaders hat,
und wobei das Brühmodul aufweist:
- ein erstes Brühmodulteil (103), und
- ein relativ zu diesem bewegbares zweites Brühmodulteil (104), wobei das erste und das zweite Brühmodulteil die Ausleitvorrichtung zum Ausleiten des Kaffees aus der Kapsel und die Injektorvorrichtung zum Einleiten der Extraktionsflüssigkeit in die Kapsel und die Brühkammer bilden, wobei die Brühkammer auf die Form der Kapsel abgestimmt ist und so abdichtend wirkt, dass durch den Injektor in die Kapsel eingeleitete Extraktionsflüssigkeit nur durch die Kapsel auf die Seite der Ausleitvorrichtung gelangen kann.

2. Einrichtung nach Anspruch 1, **dadurch gekennzeichnet, dass** die Ausleitvorrichtung und der Injektor je mindestens eine Perforationsspitze aufweisen, welche die Kapsel beim Verschliessen der Brühkammer perforiert.

3. Einrichtung nach einem der vorangehenden Ansprüche, **dadurch gekennzeichnet, dass** das Brühmodul - Kompressionsmittel aufweist, durch welche die Kapsel in der Brühkammer volumenverringernd komprimiert wird.

4. Einrichtung nach einem der vorangehenden Ansprüche, **dadurch gekennzeichnet, dass** die Kapsel würfelförmig ist.

5. Einrichtung nach einem der vorangehenden Ansprüche, **dadurch gekennzeichnet, dass** das Brühmodul ein horizontales Brühmodul ist.

6. Einrichtung nach einem der vorangehenden Ansprüche, **dadurch gekennzeichnet, dass** das erste Brühmodulteil (103) eine Kapselaufnahme mit einer Auflage und einer seitlichen Führung bildet, wobei die Auflage so positioniert ist, dass die über eine Einwurfposition eingworfene Kapsel durch die seitliche Führung geführt auf der Auflage zu liegen kommt.

7. Einrichtung nach einem der voranagehenden Ansprüche, **dadurch gekennzeichnet, dass** die Kapselwandung aus Kunststoff besteht.

8. Einrichtung nach einem der vorangehenden Ansprüche, **dadurch gekennzeichnet, dass** die Kapselwandung aus Polypropylen besteht.

9. Einrichtung nach einem der vorangehenden Ansprüche, **dadurch gekennzeichnet, dass** die Kapselwandung gänzlich frei von Filtermitteln und sonstigen zwischen der Wandung und dem Kaffeepulver angeordneten Elementen ist, sodass das Kaffeepulver direkt an jeder Seite unmittelbar anliegen kann.

## Claims

1. A device for brewing coffee, comprising at least one capsule as well as a coffee machine with a brewing module,
wherein the capsule comprises a capsule wall which surrounds a closed interior which is filled with coffee powder,
and wherein the capsule wall moreover can be perforated by perforation elements (3) of an injector device or discharge device, by way of the closure of a brewing chamber of the coffee machine which at least partly surrounds the capsule during the brewing procedure and which is for introducing an extraction fluid under pressure and for discharging coffee which has arisen in the interior of the capsule after the brewing procedure,
wherein the capsule is designed to be under overpressure during the brewing procedure, wherein the capsule with the exception of a possible peripheral edge projecting laterally maximally by 1.5 mm, has the shape of a cube or cuboid,
and wherein the brewing module comprises:
- a first brewing module part (103) and
- a second brewing module part (104) which can be moved relative to this, wherein the first and the second brewing module part form the discharge device for leading the coffee out of the capsule, the injector device for introducing the extraction fluid into the capsule, and the brewing chamber, wherein the brewing chamber is matched to the shape of the capsule and acts in such a sealing manner such that extraction fluid which is introduced through the injector into the capsule can get to the side of the discharge device only through the capsule.

2. A device according to claim 1, **characterised in that** the discharge device and the injector in each case comprise at least one perforation tip which perforates the capsule on closure of the brewing chamber.

3. A device according to one of the preceding claims, **characterised in that** the brewing module comprises compression means, by way of which the capsule in the brewing chamber is compacted in a volume-reducing manner.

4. A device according to one of the preceding claims, **characterised in that** the capsule is cube-shaped.

5. A device according to one of the preceding claims, **characterised in that** the brewing module is a horizontal brewing module.

6. A device according to one of the preceding claims, **characterised in that** the first brewing module part (103) forms a capsule receiver with a rest and a lateral guide, wherein the rest is positioned such that the capsule inserted via an insert position comes to lie on the rest in a manner guided by the lateral guide.

7. A device according to one of the preceding claims, **characterised in that** the capsule wall consists of plastic.

8. A device according to one of the preceding claims, **characterised in that** the capsule consist of polypropylene.

9. A device according to one of the preceding claims, **characterised in that** the capsule wall is completely free of filter means and other elements arranged between the wall and the coffee power, so that the coffee powder can directly bear on each side.

## Revendications

1. Dispositif de préparation de café présentant au moins une capsule ainsi qu'une machine à café dotée d'un module de préparation,
la capsule présentant une paroi qui entoure un espace intérieur fermé rempli de poudre de café,
la paroi de la capsule pouvant en outre être perforée par des éléments de perforation (3) d'un dispositif d'injection ou d'extraction lors de la fermeture d'une chambre de préparation de la machine à café qui entoure au moins en partie la capsule pendant l'opération de préparation, pour introduire un liquide d'extraction sous pression et pour évacuer le café obtenu après une opération de préparation à l'intérieur de la capsule,
la capsule étant configurée pour être placée sous surpression pendant l'opération de préparation, la capsule présentant la forme d'un cube ou d'un parallélépipède à l'exception d'une éventuelle bordure périphérique débordant latéralement d'au plus 1,5 mm,
le module de préparation présentant :
une première partie (103) de module de préparation et
une deuxième partie (104) de module de préparation mobile par rapport à la première,
la première et la deuxième partie du module de préparation formant le dispositif d'extraction qui permet d'extraire le café hors de la capsule et le dispositif d'injection qui introduit le liquide d'extraction dans la capsule et la chambre de préparation,
la chambre de préparation étant accordée à la forme de la capsule et exerçant un effet d'étanchéité de telle sorte que le liquide d'extraction introduit par l'injecteur dans la capsule ne puisse traverser la capsule que pour aboutir sur le côté du dispositif d'extraction.

2. Dispositif selon la revendication 1, **caractérisé en ce que** le dispositif d'extraction et l'injecteur présentent chacun au moins une pointe de perforation qui perfore la capsule lors de la fermeture de la chambre de préparation.

3. Dispositif selon l'une des revendications précédentes, **caractérisé en ce que** le module de préparation présente des moyens de compression par lesquels la capsule est comprimée et voit son volume réduit dans la chambre de préparation.

4. Dispositif selon l'une des revendications précédentes, **caractérisé en ce que** la capsule a la forme d'un cube.

5. Dispositif selon l'une des revendications précédentes, **caractérisé en ce que** le module de préparation est un module de préparation horizontal.

6. Dispositif selon l'une des revendications précédentes, **caractérisé en ce que** la première partie (103) du module de préparation forme un logement de capsule qui présente un appui et un guide latéral, l'appui étant placé de telle sorte que la capsule placée par l'intermédiaire d'une position d'insertion vienne se placer sur l'appui en étant guidée par le guide latéral.

7. Dispositif selon l'une des revendications précédentes, **caractérisé en ce que** la paroi de la capsule est réalisée en matière synthétique.

8. Dispositif selon l'une des revendications précédentes, **caractérisé en ce que** la paroi de la capsule est formée de polypropylène.

9. Dispositif selon l'une des revendications précédentes, **caractérisé en ce que** la paroi de la capsule est entièrement exempte de moyens de filtration et d'autres éléments disposés entre la paroi et la poudre de café de telle sorte que la poudre de café puisse venir se placer directement sur chaque côté.
